# EUROPÄISCHE PATENTSCHRIFT

(11) **EP 3 639 943 B1**
(45) Veröffentlichungstag und Bekanntmachung des Hinweises auf die Patenterteilung: **13.09.2023**
(21) Anmeldenummer: 18465605.6
(22) Anmeldetag: 15.10.2018
(51) Int. Cl.: B21D 39/04, F16C 23/00

(54) **FIXIERVERFAHREN UND HIERMIT HERGESTELLTE BAUEINHEIT**
FIXING METHODS AND STRUCTURE MADE THEREWITH
PROCÉDÉ DE FIXATION ET UNITÉ STRUCTURALE AINSI FABRIQUÉE

(43) Veröffentlichungstag der Anmeldung: 22.04.2020
(73) Patentinhaber: Vitesco Technologies GmbH, 93055 Regensburg (DE)
(72) Erfinder: Nes, George, 400359 Cluj Napoca (RO)
(74) Vertreter: Vitesco Technologies

(56) Entgegenhaltungen:
- EP-A1- 2 351 622
- EP-A1- 3 117 918
- WO-A1-2005/103547

## Beschreibung

Die vorliegende Erfindung betrifft ein Verfahren zur Fixierung eines ersten Bauteiles in einem zweiten Bauteil mit den Merkmalen des Oberbegriffes von Patentanspruch 1.

Ein bekanntes Fixierverfahren besteht darin, das erste Bauteil im zweiten Bauteil zu fixieren, indem beide Bauteile miteinander verklebt werden. Dieses Verfahren ist kostenträchtig und zeitaufwändig, da ein spezielles Klebeverfahren durchgeführt werden muss, wobei in der Regel ein entsprechender Zeitraum benötigt wird, um ein Aushärten des Klebers zu bewirken. Darüber hinaus müssen hierbei in vielen Fällen die entsprechenden Bauteile erhitzt werden. Des Weiteren fallen für den speziellen Klebeprozess und den verwendeten Kleber entsprechende Kosten an.

Weitere geeignete Fixierverfahren sind Presspassen der Teile ineinander, Verklemmen etc. Auch diese Verfahren können mit gewissen Problemen verbunden sein.

Aus der EP 2 351 622 A1 ist ein Verfahren zur Herstellung von abgedichteten Metallrohren bekannt, das die Merkmale des Oberbegriffes von Patentanspruch 1 aufweist. Hierbei werden mit einer Vertiefung am Umfang versehene Dichtungsmittel innerhalb eines Rohres angeordnet und wird die Umfangswand des Rohrs radial nach innen verformt, so dass entsprechendes Material in die Vertiefung der Dichtungsmittel eindringt.

Die EP 3 117 918 A1 beschreibt die Fixierung eines Verbinders in einem Abdeckelement durch Einpressen der Umfangswand des Abdeckelementes in eine Materialvertiefung des Verbinders.

Der vorliegenden Erfindung liegt die Aufgabe zugrunde, ein weiteres Fixierverfahren zur Verfügung zu stellen, das besonders rasch und kostengünstig durchgeführt werden kann.

Diese Aufgabe wird erfindungsgemäß bei einem Verfahren der angegebenen Art durch die kennzeichnenden Merkmale von Patentspruch 1 gelöst.

Bei dem erfindungsgemäßen Verfahren geht es um eine Fixierung des ersten Bauteils im zweiten Bauteil, so dass das erste Bauteil keine Bewegung im zweiten Bauteil, insbesondere keine Bewegung in Axialrichtung, durchführen kann. Um eine entsprechende Fixierung zu erreichen, wird die Umfangswand des zweiten Bauteils mit Hilfe eines Werkzeugs von außen so verformt, dass Material der Umfangswand des zweiten Bauteils in die auf der Außenseite der Umfangswand des ersten Bauteils vorgesehene Vertiefung eindringt und damit einen in die Vertiefung hineinragenden Materialansatz bildet, der das erste Bauteil im zweiten Bauteil fixiert. Eine derartige Fixierung erfolgt, um eine Bewegung des ersten Bauteils in Axialrichtung im zweiten Bauteil zu verhindern. Eine Bewegung kann aber auch zusätzlich in Radialrichtung oder Rotationsrichtung verhindert werden.

Das erste Bauteil ist als Lagerkartusche ausgebildet, und die Vertiefung ist in der Umfangswand der Lagerkartusche zwischen deren axial beabstandeten Lagerbereichen ausgebildet. Die Vertiefung wird hierbei so angeordnet, dass die Wandstärke der Umfangswand in den eigentlichen Lagerbereichen möglichst wenig beeinträchtigt wird.

Bei der erfindungsgemäßen Lösung wird somit das verformte Material der Umfangswand des zweiten Bauteils, nämlich der Umfangswand eines Lagergehäuses, dazu benutzt, um eine in der Umfangswand des ersten Bauteils, nämlich der Lagerkartusche, ausgebildete Vertiefung bzw. Nut auszufüllen. Für diese Lösung zum Fixieren wird keine Extrakomponente (Kleber) benötigt. Ferner kann ein Aushärteprozess des Klebers, der mit Extrazeit und Extrakosten verbunden ist, entfallen.

Um den Verformungsvorgang der Umfangswand des zweiten Bauteils zu erleichtern, kann die Umfangswand des zweiten Bauteils an der Stelle, an der sie mit dem Werkzeug verformt wird, mit einer geringeren Wandstärke versehen werden. Die entsprechende Dimensionierung der Stelle mit geringerer Wandstärke kann hierbei in Abhängigkeit von den jeweiligen Bauteilen und/oder dem verwendeten Deformationswerkzeug vorgenommen werden.

Vorzugsweise wird die Umfangswand des zweiten Bauteils mit einem Stanzwerkzeug verformt. Was die Art der verwendeten Bauteile betrifft, so wird ein erstes Bauteil mit einer zylindrischen Umfangswand in einem zweiten Bauteil mit einer zylindrischen Umfangswand fixiert. Die Vertiefung wird dabei auf der Außenseite der zylindrischen Umfangswand des ersten Bauteils angeordnet, und die zylindrische Umfangswand des zweiten Bauteils wird vorzugsweise mit einem Stanzwerkzeug so verformt, dass ein von der Innenseite der Umfangswand des zweiten Bauteils radial nach innen vorstehender Materialansatz gebildet wird, der in die Vertiefung eingreift und somit die gewünschte Fixierung der Bauteile bewirkt.

Die Fixierung erfolgt vorzugsweise formschlüssig und kraftschlüssig.

Bei dem erfindungsgemäßen Verfahren kann es beispielsweise um die Fixierung einer Lagerkartusche im Gehäuse eines Propellerantriebs gehen.

Die in der Umfangswand des ersten Bauteils ausgebildete Vertiefung kann punktförmig oder linear ausgebildet sein und sich insbesondere als Ringnut in der Umfangswand des ersten Bauteils erstrecken. Auch die Verformung der Umfangswand des zweiten Bauteils kann auf verschiedene Art und Weise durchgeführt werden, wobei eine punkförmige Verformung bevorzugt wird, so dass Material punktförmig in die Vertiefung der Umfangswand des ersten Bauteils eindringt.

Die Verformung der Umfangswand des zweiten Bauteils kann auch an mehreren Stellen durchgeführt werden, um mehrere Fixierstellen zu erhalten. So werden bei einer besonders bevorzugten Ausführungsform mehrere Fixierstellen mit Abstand voneinander an der Umfangswand des zweiten Bauteils vorgesehen. So können beispielsweise einer Ringnut um den Umfang des ersten Bauteils mehrere punktförmige Fixierstellen zugeordnet sein.

Da im Falle einer Lagerkartusche die Position der Vertiefung bzw. Nut zwischen den eigentlichen Lagern vorgesehen ist, kann die Kartusche im Lagergehäuse fixiert werden, ohne dass der Lagerbereich mit Außendruck beaufschlagt werden muss, so dass hierdurch die Lebensdauer des Lagers nicht verkürzt wird.

Die vorliegende Erfindung betrifft ferner eine Baueinheit gemäß Anspruch 7 umfassend ein in einem zweiten Bauteil angeordnetes erstes Bauteil, das durch ein Verfahren der vorstehend beschriebenen Art im zweiten Bauteil fixiert worden ist. Eine solche Baueinheit betrifft eine in einem Lagergehäuse angeordnete Lagerkartusche. Hierbei kann es sich um die Lageranordnung eines Propellerantriebes handeln.

Die Erfindung wird nachfolgend anhand eines Ausführungsbeispiels in Verbindung mit der Zeichnung im Einzelnen erläutert. Es zeigen:
- Figur 1: einen Vertikalschnitt durch eine Lageranordnung für einen Propellerantrieb; und
- Figur 2: eine vergrößerte Teilansicht von Figur 1.

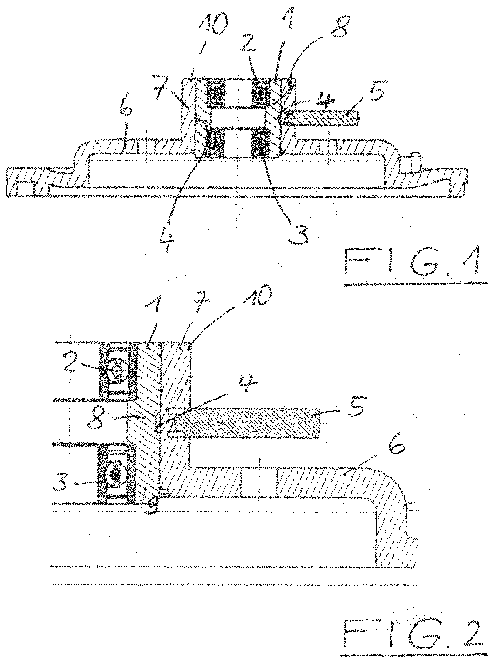

Figur 1 zeigt einen Teil eines Propellerantriebes, der ein Lagergehäuse 7 mit einer Umfangswand 10 aufweist. Das Lagergehäuse 7 ist etwa zylindrisch ausgebildet und besitzt eine zylindrische Umfangswand 10. Im Lagergehäuse 7 ist eine Lagerkartusche 1 angeordnet, die gegen eine Axialbewegung im Lagergehäuse 7 fixiert ist.

Die Lagerkartusche 1 weist ebenfalls eine zylindrische Umfangswand 8 auf, die ein oberes Lager 2 und ein unteres Lager 3 umgrenzt. Beide Lager 2, 3 sind mit axialem Abstand voneinander angeordnet, so dass sich zwischen beiden Lagern ein Bereich der Umfangswand 8 ergibt, der in Radialrichtung nicht an ein Lager angrenzt.

Das Verfahren zur Fixierung der Lagerkartusche 1 innerhalb des Lagergehäuses 7 des Propellerantriebs 6 wird nunmehr im Einzelnen beschrieben. Hierzu wird die Außenseite der Umfangswand 8 der Lagerkartusche 1 in dem Bereich, der nicht an ein Lager 2 bzw. 3 angrenzt, mit einer Vertiefung 4 versehen, bei der es sich beispielsweise um eine Umfangsnut handeln kann. Die mit einer derartigen Nut versehene Lagerkartusche 1 wird dann in das Lagergehäuse 7 eingesetzt, wobei die Umfangswand 8 der Lagerkartusche 1 und die Umfangswand 10 des Lagergehäuses 7 miteinander in Kontakt treten. Es wird dabei die in Figur 1 dargestellte Position der Lagerkartusche 1 erreicht.

Zur axialen Fixierung der Lagerkartusche 1 im Lagergehäuse 7 wird dann ein Stanzwerkzeug 5 mit der Außenseite der Umfangswand 10 des Lagergehäuses 7 in Kontakt gebracht, und zwar an einer Stelle, die der Vertiefung 4 gegenüberliegt. Diese Stelle kann beispielsweise auf der Außenseite der Umfangswand 10 des Lagergehäuses markiert sein. Die Stelle kann aber auch dadurch gekennzeichnet sein, dass hier die Wandstärke der Umfangswand 10 geringer ist als in den übrigen Bereichen, um das Ansetzen und Betätigen des Stanzwerkzeuges 5 zu erleichtern. Jedenfalls wird durch Betätigung des Stanzwerkzeuges 5 die Umfangswand 10 des Lagergehäuses 7 so verformt, dass Material der Umfangswand nach innen in die Vertiefung 4 in der Umfangswand 8 der Lagerkartusche 1 wandert, so dass sich ein Materialansatz 9 ausbildet, der die Vertiefung 4 ausfüllt. Hierdurch wird eine form- und kraftschlüssige Fixierung der Lagerkartusche 1 innerhalb des Lagergehäuses 7 erreicht, und zwar kann diese Fixierung eine Bewegung der Lagerkartusche 1 in Axialrichtung, Radialrichtung und auch in Rotationsrichtung verhindern.

## Patentansprüche

1. Verfahren zur Fixierung eines ersten Bauteiles in einem zweiten Bauteil mit den folgenden Schritten:
Ausbilden einer Vertiefung (4) in der Außenseite einer zylindrischen Umfangswand (8) des ersten Bauteiles;
Einsetzen des ersten Bauteiles in das zweite Bauteil; und
Verformen einer zylindrischen Umfangswand (10) des zweiten Bauteils mit einem von außen gegen die Umfangswand (10) des zweiten Bauteils geführten Werkzeug, so dass diese verformt wird und Material der Umfangswand (10) des zweiten Bauteils in die Vertiefung (4) eindringt und dadurch das erste Bauteil innerhalb des zweiten Bauteils fixiert wird,
**dadurch gekennzeichnet, dass** als erstes Bauteil eine Lagerkartusche (1) in einem Lagergehäuse (7) als zweites Bauteil fixiert wird und dass die Vertiefung (4) in der Umfangswand der Lagerkartusche (1) zwischen deren Lagerbereichen (2, 3) ausgebildet wird.

2. Verfahren nach Anspruch 1, **dadurch gekennzeichnet, dass** die Umfangswand (10) des zweiten Bauteils an der Stelle, an der sie mit dem Werkzeug verformt wird, mit einer geringeren Wandstärke versehen wird.

3. Verfahren nach Anspruch 1 oder 2, **dadurch gekennzeichnet, dass** die Umfangswand (10) des zweiten Bauteils mit einem Stanzwerkzeug (5) verformt wird.

4. Verfahren nach einem der vorangehenden Ansprüche, **dadurch gekennzeichnet, dass** als Vertiefung (4) eine Ringnut in der Umfangswand (8) des ersten Bauteils ausgebildet wird.

5. Verfahren nach einem der vorangehenden Ansprüche, **dadurch gekennzeichnet, dass** die Verformung der Umfangswand (10) des zweiten Bauteils so durchgeführt wird, dass das Material punktförmig in die Vertiefung (4) eindringt.

6. Verfahren nach einem der vorangehenden Ansprüche, **dadurch gekennzeichnet, dass** die Verformung der Umfangswand (10) des zweiten Bauteils an mehreren Stellen durchgeführt wird, um mehrere Fixierstellen zu erhalten.

7. Baueinheit umfassend ein in einem zweiten Bauteil fixiertes erstes Bauteil, das durch ein Verfahren nach einem der Ansprüche 1 bis 6 im zweiten Bauteil fixiert worden ist, wobei eine Vertiefung (4) in der Außenseite einer zylindrischen Umfangswand (8) des ersten Bauteiles ausgebildet ist; wobei das erste Bauteil in das zweite Bauteil eingesetzt ist; wobei eine zylindrische Umfangswand (10) des zweiten Bauteils mit einem von außen gegen die Umfangswand (10) des zweiten Bauteils geführten Werkzeug verformt ist, so dass Material der Umfangswand (10) des zweiten Bauteils in die Vertiefung (4) eingedrungen ist und dadurch das erste Bauteil innerhalb des zweiten Bauteils fixiert ist, **dadurch gekennzeichnet, dass** als erstes Bauteil eine Lagerkartusche (1) in einem Lagergehäuse (7) als zweites Bauteil fixiert ist und dass die Vertiefung (4) in der Umfangswand der Lagerkartusche (1) zwischen deren Lagerbereichen (2, 3) ausgebildet ist.

## Claims

1. Method for fixing a first component in a second component, said method comprising the following steps:
configuring a depression (4) in the external side of a cylindrical circumferential wall (8) of the first component;
inserting the first component into the second component; and
deforming a cylindrical circumferential wall (10) of the second component by way of a tool that is guided from the outside against the circumferential wall (10) of the second component such that said circumferential wall (10) is deformed and material of the circumferential wall (10) of the second component invades the depression (4) and the first component on account thereof is fixed within the second component,
**characterized in that** a bearing cartridge (1) as the first component is fixed in a bearing housing (7) as the second component, and **in that** the depression (4) in the circumferential wall of the bearing cartridge (1) is configured between the bearing regions (2, 3) of said bearing cartridge (1).

2. Method according to Claim 1, **characterized in that** the circumferential wall (10) of the second component at the location where said circumferential wall (10) is deformed by the tool is provided with a smaller wall thickness.

3. Method according to Claim 1 or 2, **characterized in that** the circumferential wall (10) of the second component is deformed by a punching tool (5).

4. Method according to one of the preceding claims, **characterized in that** an annular groove is configured as the depression (4) in the circumferential wall (8) of the first component.

5. Method according to one of the preceding claims, **characterized in that** the deformation of the circumferential wall (10) of the second component is carried out such that the material invades the depression (4) in a punctiform manner.

6. Method according to one of the preceding claims, **characterized in that** the deformation of the circumferential wall (10) of the second component is carried out at a plurality of locations so as to obtain a plurality of fixing locations.

7. Functional unit comprising a first component which is fixed in a second component and has been fixed in the second component by a method according to one of Claims 1 to 6, wherein a depression (4) is configured in the external side of a cylindrical circumferential wall (8) of the first component; wherein the first component is inserted into the second component; wherein a cylindrical circumferential wall (10) of the second component is deformed by way of a tool that is guided from the outside against the circumferential wall (10) of the second component such that material of the circumferential wall (10) of the second component has invaded the depression (4) and the first component on account thereof is fixed within the second component, **characterized in that** a bearing cartridge (1) as the first component is fixed in a bearing housing (7) as the second component, and **in that** the depression (4) in the circumferential wall of the bearing cartridge (1) is configured between the bearing regions (2, 3) of said bearing cartridge (1) .

## Revendications

1. Procédé de fixation d'un premier composant dans un deuxième composant, comprenant les étapes suivantes :
formation d'un évidement (4) dans le côté extérieur d'une paroi périphérique (8) cylindrique du premier composant ;
insertion du premier composant dans le deuxième composant ; et
déformation d'une paroi périphérique (10) cylindrique du deuxième composant à l'aide d'un outil guidé depuis l'extérieur contre la paroi périphérique (10) du deuxième composant, de telle sorte que celle-ci soit déformée et que la matière de la paroi périphérique (10) du deuxième composant pénètre dans l'évidement (4) et qu'ainsi le premier composant soit fixé à l'intérieur du deuxième composant, **caractérisé en ce qu'**en tant que premier composant, une cartouche de palier (1) est fixée dans un logement de palier (7) en tant que deuxième composant et **en ce que** l'évidement (4) est formé dans la paroi périphérique de la cartouche de palier (1) entre ses régions de palier (2, 3).

2. Procédé selon la revendication 1, **caractérisé en ce que** la paroi périphérique (10) du deuxième composant est pourvue d'une épaisseur de paroi plus faible au point où elle est déformée à l'aide de l'outil.

3. Procédé selon la revendication 1 ou 2, **caractérisé en ce que** la paroi périphérique (10) du deuxième composant est déformée à l'aide d'un outil d'estampage (5).

4. Procédé selon l'une des revendications précédentes, **caractérisé en ce qu'**en tant qu'évidement (4), une rainure annulaire est formée dans la paroi périphérique (8) du premier composant.

5. Procédé selon l'une des revendications précédentes, **caractérisé en ce que** la déformation de la paroi périphérique (10) du deuxième composant est effectuée de telle sorte que la matière pénètre dans l'évidement (4) de manière ponctuelle.

6. Procédé selon l'une des revendications précédentes, **caractérisé en ce que** la déformation de la paroi périphérique (10) du deuxième composant est effectuée en plusieurs points, afin d'obtenir plusieurs points de fixation.

7. Unité structurale comportant un premier composant fixé dans un deuxième composant, lequel premier composant a été fixé dans le deuxième composant par le biais d'un procédé selon l'une des revendications 1 à 6, dans lequel un évidement (4) est formé dans le côté extérieur d'une paroi périphérique (8) cylindrique du premier composant ; dans lequel le premier composant est inséré dans le deuxième composant ; dans lequel une paroi périphérique (10) cylindrique du deuxième composant est déformée à l'aide d'un outil guidé depuis l'extérieur contre la paroi périphérique (10) du deuxième composant, de telle sorte que la matière de la paroi périphérique (10) du deuxième composant pénètre dans l'évidement (4) et qu'ainsi le premier composant soit fixé à l'intérieur du deuxième composant, **caractérisée en ce qu'**en tant que premier composant, une cartouche de palier (1) est fixée dans un logement de palier (7) en tant que deuxième composant et **en ce que** l'évidement (4) est formé dans la paroi périphérique de la cartouche de palier (1) entre ses régions de palier (2, 3).
